# EUROPÄISCHE PATENTSCHRIFT

(11) **EP 3 400 459 B1**
(45) Veröffentlichungstag und Bekanntmachung des Hinweises auf die Patenterteilung: **24.06.2020**
(21) Anmeldenummer: 17702773.7
(22) Anmeldetag: 06.01.2017
(51) Int. Cl.: G01S 17/89, G01B 11/02, G02B 21/00

(54) **VERFAHREN ZUR ELEKTRONISCHEN ANALYSE EINES ZEITLICH VERÄNDERLICHEN SIGNALS**
METHOD FOR ELECTRONICALLY ANALYZING A SIGNAL CHANGING OVER TIME
PROCÉDÉ D'ANALYSE ÉLECTRONIQUE D'UN SIGNAL VARIANT DANS LE TEMPS

(30) Priorität: 08.01.2016 DE 102016100261
(43) Veröffentlichungstag der Anmeldung: 14.11.2018
(73) Patentinhaber: Nanofocus AG, 46049 Oberhausen (DE)
(72) Erfinder: FRANK, Johannes, 51065 Köln (DE); JAKOB, Gerd, 45131 Essen (DE); SPENGLER, Michael, 45897 Gelsenkirchen (DE)
(74) Vertreter: Schneiders & Behrendt PartmbB Rechtsanwälte - Patentanwälte
(86) Internationale Anmeldenummer: PCT/EP2017/050241
(87) Internationale Veröffentlichungsnummer: WO 2017/118717

(56) Entgegenhaltungen:
- EP-A1- 2 693 201
- EP-A2- 1 589 352
- DD-A1- 248 893
- DE-T2- 69 215 221
- US-A1- 2003 137 669

## Beschreibung

Die Erfindung betrifft ein Verfahren zur elektronischen Analyse eines zeitlich veränderlichen Signals mit mindestens einem bezüglich seiner Amplitude und dem Zeitpunkt zu detektierenden Extremwert, mittels einer Detektionsschaltung, die als Spitzenwertspeicher arbeitet und den zeitlich veränderlichen Signal nach Überschreiten eines Schwellwerts bis zum Erreichen der maximalen Amplitude folgt, wobei beim Überschreiten des Extremwerts ein Spitzenindikatorsignal generiert und die Maximalamplitude gespeichert wird.

Im Prinzip ist ein ähnliches Verfahren aus der DD 248 893 A1 bekannt. Allerdings ist in diesem Dokument die Berücksichtigung eines Schwellwerts bei der Analyse nicht vorgesehen. Insofern können mit Hilfe dieses vorbekannten Verfahrens Rauschen und Stör-Signale bzw. Peaks, die unterhalb einer gewünschten Sensitivitätsschwelle liegen, nicht von vorherein aus der Messung ausgeschlossen werden. Die Signalnachverfolgeranordnung folgt dem Eingangssignal bis zu dessen maximalem Wert. Das Durchlaufen lokaler Maxima mit kleinerer Amplitude wirkt sich bei der Nachverfolgung nicht aus. Sie folgt aber jeder weiteren Steigerung des Signals bis zum höchsten Maximum.

DE 69215221 offenbart ein Verfahren zur elektronischen Analyse eines zeitlich veränderlichen Signals wobei ein Spitzenwertspeicher nach Überschreiten eines Schwellwerts aktiviert und nach Unterschreiten eines Schwellwerts deaktiviert wird.

Um nicht nur den Betrag des Maximums sondern auch den Zeitpunkt seines Auftretens zu erfassen, wird immer dann, wenn auf das steigende Signal ein Signalabfall folgt, was das Durchlaufen eines lokalen Maximums bedeutet, ein Spitzenindikatorsignal generiert. Das kann beispielsweise ein Rechteckpuls sein.

Durch Vergleich mit einem Schwellwert wird erreicht, dass der Nachverfolgermechanismus erst dann aktiviert wird, wenn der Schwellwert überschritten wird. Somit werden Rauschenspitzen und Störsignale unterhalb des Schwellwerts nicht detektiert. Das als bekannt vorausgesetzte Verfahren scheitert jedoch, wenn im Messzyklus mehr als ein Extremwert örtlich und zeitlich genau bestimmt werden soll, da -wie oben ausgeführt- beim vorbekannten Verfahren lediglich der Extremwert mit der höchsten Amplitude ermittelt wird.

Der Erfindung liegt daher die Aufgabe zugrunde, ein Verfahren der eingangs genannten Art so zu führen, dass die Nachteile des Standes der Technik überwunden werden und beliebig viele relevante Signalspitzen erkannt werden können.

Die Erfindung löst diese Aufgabe gemäß Anspruch 1.

Die technische Ausführung der Erfindung lässt allerdings auch zu, den zweiten oder weitere Spitzenwertspeicher zu deaktivieren, so dass das Verfahren im oben beschriebenen bekannten Betrieb arbeiten kann.

Die Spitzenindikatoren sind elektrische Signale, die als Trigger für die nachfolgende Signalverarbeitung dienen, bei der dem Zeitpunkt des Spitzenindikators eine Lageinformation zugewiesen wird. Als Spitzenindikatoren können Strom- oder Spannungspulse oder -Flanken verwendet werden. In der konkreten Umsetzung werden schmale Rechteckpulse erzeugt.

Da beim Verfahren mehrere Spitzenindikatoren erzeugt werden, erfordert dies die Unterscheidungsmöglichkeit der übertragenden Triggersignale, so dass eine Zuordnung zu Spitzenwertspeicher 1 und Spitzenwertspeicher 2 möglich ist. Dies ist für die nachfolgende Auswertung erforderlich. Unterscheidungskriterien können die Amplitude des Spitzenindikators, seine zeitliche Dauer oder andere Merkmale wie seine Form etc. sein.

Die Spitzenindikatoren werden einer nachfolgenden Auswerteelektronik zugeführt, die die zeitlichen Differenzen zwischen dem Auftreten der Indikatoren bestimmen.

Gemäß einer vorteilhaften Weiterbildung der Erfindung ist gemäß Anspruch 5 vorgesehen, dass gleichzeitig mehrere Signalauswertungen parallel durchgeführt und die jeweiligen zeitlichen Signale mehrkanalig detektiert und die detektierten Maxima mehrkanalig ausgewertet werden.

Mit Hilfe des erfindungsgemäßen Verfahrens ist es darüber hinaus gemäß Anspruch 6 möglich, dass bei beschichteten Substraten der Abstand zur Schicht sowie zum Substrat detektiert wird.

Zur Erhöhung der Messgeschwindigkeit ist gemäß Anspruch 7 vorgesehen, dass ein optischer Sensor mit ultraschnell fokussierbarer akusto-optischer Linse eingesetzt wird.

Dabei können mit der akusto- optischen Linse zeitlich veränderliche Signale in Messzyklen mit Wiederholfrequenzen von über 1 MHz erzeugt und mit dem Verfahren ausgewertet werden.

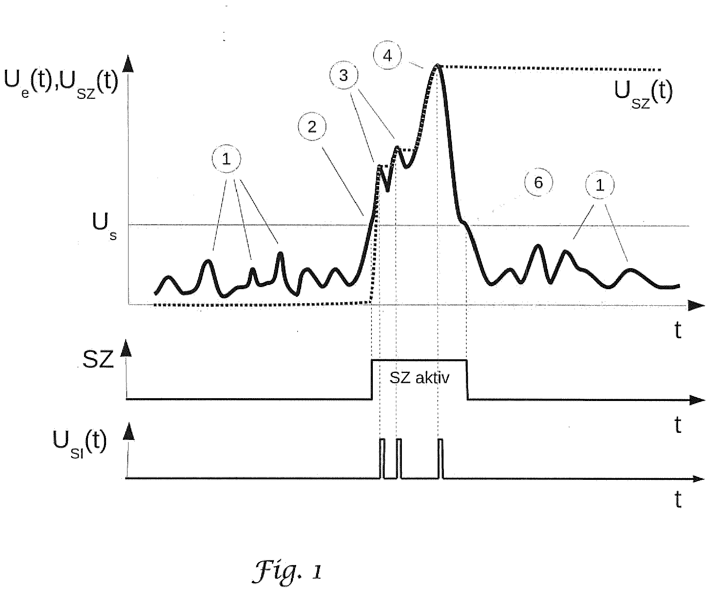

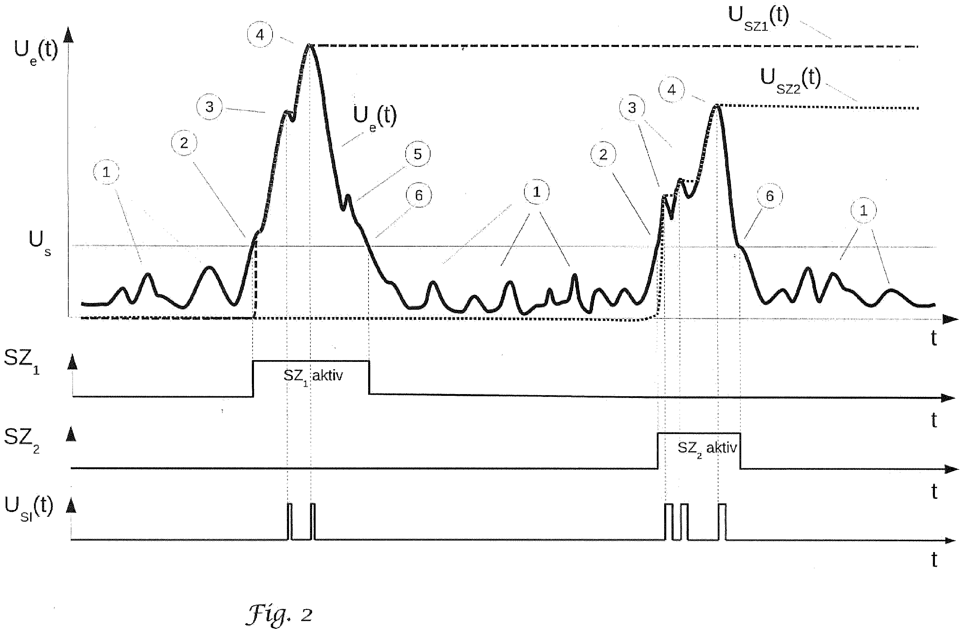

Im Folgenden wird die Erfindung anhand von Fig. 2 dargestellt und erläutert. Fig. 1 zeigt ein aus dem Stand der Technik bereits bekanntes Messprinzip.

Es zeigen:
- Fig. 1:: Prinzip eines Signalnachverfolgungsverfahren mit einem Spitzenwertspeicher
- Fig. 2:: Prinzip eines Signalnachverfolgungsverfahren mit zwei Spitzenwertspeichern

In der Figur 1 ist das Prinzip einer Extremwerterkennung mit einer Nachverfolgung eines zeitlich veränderlichen Eingangssignals Uₑ(t) dargestellt.

Eine solche Nachverfolgung kann bei elektrischen Spannungsverläufen als Kondensator realisiert werden, der von einem Eingangssignal über eine Diode aufgeladen und mit einer Rücksetzelektronik wieder entladen wird. In Figur 1 wird ein zeitlich veränderliches Signal (Uₑ(t)) der Nachverfolgung zugeführt. Das Ausgangssignal U_{sz}(t) folgt diesem Eingangssignal bis zu dessen maximalem Wert. Das Durchlaufen lokaler Maxima mit anschließendem Abfall der Eingangsspannung wirkt sich auf die Nachverfolgungsspannung nicht aus. Es folgt aber jeder weiteren Steigerung des Signals bis zum höchsten Maximum.

Um nicht nur den Betrag des Maximums sondern auch den Zeitpunkt seines Auftretens zu erfassen, wird immer dann, wenn auf ein steigendes Signal Uₑ(t) ein Signalabfall folgt, ein Spitzenindikatorsignal Uₛᵢ(t) generiert. Das kann, wie in Figur 1 gezeigt, ein Rechteckpuls sein.

Durch Vergleich mit einem Schwellwert U_{sw} wird erreicht, dass der Nachverfolgermechanismus erst dann aktiviert wird, wenn der Schwellwert überschritten wird.

Dabei können auch unterschiedliche Schwellwerte vorgegeben werden, damit beispielsweise das schwächere Signal gezielt ausgewertet werden kann.

Mit Hilfe dieser einen Nachverfolgung ist jedoch nur die Detektion des höchsten Extremwerts im Signalverlauf möglich.

In der Figur 2 werden die Verhältnisse dargestellt, wenn bei Durchlaufen eines Messfensters zwei Nutzsignale (4) auftreten können und getrennt erfasst werden sollen. Dafür wird mit zwei Spitzenwertspeichern gearbeitet. Beim erstmaligen Überschreiten des Schwellwertes wird der erste Spitzenwertspeicher aktiviert und es werden Pulse im Spitzenindikator generiert, wie oben beschrieben. Nach Unterschreiten des Schwellwerts und erneutem Überschreiten wird der zweite Spitzenwertspeicher aktiviert. Wiederum werden Pulse im Spitzenindikator generiert, wenn eine lokale Spitze durchlaufen wird.

Um die Pulse im Signal Uₛᵢ(t) dem ersten und dem zweiten Spitzenwertspeicher zuordnen zu können, werden bei den aktivierten Spitzenwertspeichern 1 bzw. 2 unterschiedlich breite Pulse generiert. Zur Unterscheidung können auch die Höhe des Pulses, die Form oder andere Merkmale bzw. Kodierungen dienen. In den Figuren ist mit dem Bezugszeichen 4 das Nutzsignal bezeichnet, welches der größte Peak im verrauschten Signal ist, dessen Amplitude und Auftreten erfasst werden sollen.

Mit dem Bezugszeichen 1 sind Rauschspitzen bezeichnet, die nicht erfasst werden und auch keinen Puls im Spitzenindikatorsignal Uₛᵢ(t) generieren, da sie unter dem Schwellwert U_{sw} liegen.

Mit dem Bezugszeichen 2 ist die Stelle bezeichnet, an der das Eingangssignal Uₑ(t) den Schwellwert U_{sw} übersteigt. Der Spitzenwertspeicher wird aktiviert und bei Überschreiten lokaler Maxima werden Pulse im Spitzenindikatorsignal Uₛᵢ(t) generiert.

Mit dem Bezugszeichen 3 sind in den Figuren lokale Rauschspitzen bezeichnet, die oberhalb des Schwellwerts U_{sw} liegen, bei deren Auftreten ein Puls im Spitzenindikatorsignal Uₛᵢ(t) generiert wird.

Mit dem Bezugszeichen 5 ist eine lokale Rauschspitze bezeichnet, bei der kein Puls im Uₛᵢ(t) generiert wird, da seine Höhe die Höhe von dem Nutzsignal 4 nicht übersteigt.

Bei dem Bezugszeichen 6 unterschreitet das Eingangssignal Uₑ(t) den Schwellwert U_{sw}. Der Spitzenwertspeicher hält seinen Wert fest bis zum Auslesen und Rücksetzen beim Start eines neuen Messzyklus. Die Generierung von Pulsen bei weiteren lokalen Spitzen wird deaktiviert. Bei einem System zur Erfassung von zwei oder mehr Nutzsignalpeaks wird bei erneutem Übersteigen des Schwellwertes der nächste Spitzenwertspeicher aktiviert.

## Patentansprüche

1. Verfahren zur elektronischen Analyse eines zeitlich veränderlichen Signals (Uₑ(t)) mit mindestens einem bezüglich seiner Amplitude und dem Zeitpunkt zu detektierenden Extremwert mittels einer Detektionsschaltung, die als Spitzenwertspeicher arbeitet und dem zeitlich veränderlichen Signal nach Überschreiten eines Schwellwerts(Uₛ) bis zum Erreichen der maximalen Amplitude folgt, wobei beim Überschreiten des Extremwerts ein Spitzenindikatorsignal (Uₛᵢ(t)) generiert und die Maximal-Amplitude gespeichert wird,
wobei zur Erfassung von mehr als einem Extremwert im zeitlich veränderlichen Signal nach dem Erzeugen des ersten Spitzenindikatorsignals ein erster Spitzenwertspeicher aktiviert und nach Unterschreiten des Schwellwerts die Nachverfolgung des Signals (Ue(t)) deaktiviert wird, **dadurch gekennzeichnet, dass** nachdem im weiteren Verlauf das Signal den Schwellwert erneut übersteigt, eine weitere Nachverfolgung des Signals (Uₑ(t)) aktiviert wird bis der nächste zu detektierende Extremwert erreicht, ein weiteres Spitzenindikatorsignal (Uₛᵢ(t)) generiert, ein zweiter Spitzenwertspeicher aktiviert und diese weitere Maximalamplitude gespeichert wird und am Ende des Messzyklus beide Spitzenwertspeicher ausgelesen und zurückgesetzt werden, wobei als zeitlich veränderliches Signal die Lichtintensität bei einem optischen Messvorgang detektiert wird, wodurch Abstände zu Oberflächen detektiert werden.

2. Verfahren nach Anspruch 1, **dadurch gekennzeichnet, dass** mehr als zwei Extremwerte durch Aktivierung weiterer Spannungsnachverfolgungen detektiert werden.

3. Verfahren nach Anspruch 2 oder 3 , **dadurch gekennzeichnet, dass** die jeweiligen Spitzenindikatorsignale (Uₛᵢ(t)) nach Art, Form, Pulshöhe und Pulsbreite unterscheidbar sind.

4. Verfahren nach einem der Ansprüche 1 bis 3, **dadurch gekennzeichnet, dass** zur Nachverfolgung des zu detektierenden Siginals (Uₑ(t)) ein Kondensator über eine Diode aufgeladen wird bis zum Erreichen des Maximalwerts und mittels einer Rücksetzelektronik nach Erzeugung eines oder mehrerer Spitzenindikatorsignale (Uₛᵢ(t)) aktiv zurückgesetzt wird.

5. Verfahren nach einem der Ansprüche 1 bis 4, **dadurch gekennzeichnet, dass** gleichzeitig mehrere Signalauswertungen parallel durchgeführt und die jeweiligen zeitlichen Signale mehrkanalig detektiert und die detektierten Maxima mehrkanalig ausgewertet werden.

6. Verfahren nach einem der Ansprüche 1 bis 5, **dadurch gekennzeichnet, dass** bei beschichteten Substraten der Abstand zur Schicht sowie zum Substrat detektiert wird.

7. Verfahren nach einem der Ansprüche 1 bis 6, **dadurch gekennzeichnet, dass** ein optischer Sensor mit ultraschnell fokussierbarer akusto-optischer Linse eingesetzt wird.

8. Verfahren nach Anspruch 7, **dadurch gekennzeichnet, dass** mit der akusto-optischen Linse zeitlich veränderliche Signale in Messzyklen mit Wiederholfrequenzen von über 1 MHz erzeugt und mit dem Verfahren ausgewertet werden.

## Claims

1. Method for electronically analysing a time-variable signal (Uₑ(t)) with at least one extreme value to be detected with respect to its amplitude and the point in time by means of a detection circuit, which operates as a peak value memory unit and tracks the time-variable signal after a threshold value (Uₛ) is exceeded and until the maximum amplitude is reached, wherein when the extreme value is exceeded, a peak indicator signal (Uₛᵢ(t)) is generated and the maximum amplitude is stored, wherein to record more than one extreme value in the time-variable signal, a first peak value memory unit is activated following the generation of the first peak indicator signal and tracking of the signal (Uₑ(t)) is deactivated after a fall below the threshold value, **characterised in that** after the signal exceeds the threshold value once again further on, further tracking of the signal (Uₑ(t)) is activated until the next extreme value to be detected is reached, another peak indicator signal (Uₛᵢ(t)) is generated, a second peak value memory unit is activated and this further maximum amplitude is stored, and at the end of the measuring cycle both peak value memory units are read and reset, wherein the light intensity in an optical measuring process is detected as the time-variable signal, whereby distances from surfaces are detected.

2. Method according to claim 1, **characterised in that** more than two extreme values are detected by activating further voltage trackings.

3. Method according to claim 2 or 3, **characterised in that** the respective peak indicator signals (Uₛᵢ(t)) are distinguishable according to type, shape, pulse height and pulse width.

4. Method according to any one of claims 1 to 3, **characterised in that** to track the signal (Uₑ(t)) to be detected, a capacitor is charged via a diode until the maximum value is reached and is actively reset by means of reset electronics following generation of one or more peak indicator signals (Uₛᵢ(t)).

5. Method according to any one of claims 1 to 4, **characterised in that** multiple signal evaluations are carried out simultaneously in parallel and the respective time signals are detected on multiple channels and the detected maxima are evaluated on multiple channels.

6. Method according to any one of claims 1 to 5, **characterised in that** in the case of coated substrates, the distance to the coating and to the substrate is detected.

7. Method according to any one of claims 1 to 6, **characterised in that** an optical sensor with an ultrafast focusable acousto-optical lens is used.

8. Method according to claim 7, **characterised in that** time-variable signals are generated with the acousto-optical lens in measuring cycles with repetition frequencies of over 1 MHz and are evaluated using the method.

## Revendications

1. Procédé d'analyse électronique d'un signal pouvant varier dans le temps (Uₑ(t)) avec au moins une valeur extrême à détecter quant à son amplitude et son moment au moyen d'un circuit de détection, qui fonctionne en tant que mémoire de valeurs de crête et qui suit le signal pouvant varier dans le temps après le dépassement d'une valeur de seuil (Uₛ) jusqu'à ce que l'amplitude maximale soit atteinte, dans lequel lors du dépassement de la valeur extrême, un signal indicateur de crête (Uₛᵢ(t)) est généré et l'amplitude maximale est mémorisée, dans lequel pour détecter plus d'une valeur extrême dans le signal pouvant varier dans le temps, après la génération du premier signal indicateur de crête, une première mémoire de valeurs de crête est activée et, après le passage en dessous de la valeur de seuil, le suivi du signal (Ue(t)) est désactivé, **caractérisé en ce qu'**après que par la suite le signal dépasse à nouveau la valeur de seuil, un autre suivi du signal (Ue((t)) est activé jusqu'à ce que la prochaine valeur extrême à détecter soit atteinte, un autre signal indicateur de crête (Uₛᵢ(t)) est généré, une deuxième mémoire de valeurs de crête est activée et ladite autre amplitude maximale est mémorisée et, à la fin du cycle de mesure, les deux mémoires de valeurs de crête sont lues et réinitialisées, dans lequel l'intensité lumineuse est détectée lors d'une opération de mesure optique en tant que signal pouvant varier dans le temps, ce qui permet de détecter des espacements par rapport aux surfaces.

2. Procédé selon la revendication 1, **caractérisé en ce que** plus de deux valeurs extrêmes sont détectées par l'activation d'autres suivis de tension.

3. Procédé selon la revendication 2 ou 3, **caractérisé en ce que** les signaux indicateurs de crêtes (Uₛᵢ(t)) respectifs peuvent être différenciés quant au type, à la forme, à la hauteur d'impulsion et à la largeur d'impulsion.

4. Procédé selon l'une quelconque des revendications 1 à 3, **caractérisé en ce qu'**aux fins du suivi du signal (Uₑ(t)) à détecter, un condensateur est chargé par l'intermédiaire d'une diode jusqu'à ce que la valeur maximale soit atteinte et est activement réinitialisé au moyen d'une électronique de réinitialisation après la génération d'un ou de plusieurs signaux indicateurs de crête (Uₛᵢ(t))

5. Procédé selon l'une quelconque des revendications 1 à 4, **caractérisé en ce que** plusieurs évaluations de signaux sont mises en oeuvre simultanément en parallèle et les signaux respectifs dans le temps sont détectés de manière multicanale plusieurs canaux et les valeurs maximales détectées sont évaluées de manière multicanale.

6. Procédé selon l'une quelconque des revendications 1 à 5, **caractérisé en ce qu'**en présence de substrats revêtus, l'espacement par rapport à la couche ainsi que par rapport au substrat est détecté.

7. Procédé selon l'une quelconque des revendications 1 à 6, **caractérisé en ce qu'**un capteur optique avec une lentille acousto-optique à mise au point ultra rapide est employé.

8. Procédé selon la revendication 7, **caractérisé en ce que** des signaux pouvant varier dans le temps sont générés lors de cycles de mesure à des fréquences de répétition supérieures à 1 MHz avec la lentille acousto-optique et sont évalués avec le procédé.
